# EUROPÄISCHE PATENTANMELDUNG

(11) **EP 2 371 224 A2**
(43) Veröffentlichungstag der Anmeldung: **05.10.2011**
(21) Anmeldenummer: 11160700.8
(22) Anmeldetag: 31.03.2011
(51) Int. Cl.: A22C 17/00

(54) **Rippenschälgerät**

(30) Priorität: 01.04.2010 DE 102010013626
(71) Anmelder: SCHMID & WEZEL GmbH & Co., 75433 Maulbronn (DE)
(72) Erfinder: Kaiser, Dieter, 77948 Friesenheim (DE); Hoffmann, Oleg, 75180 Pforzheim (DE)
(74) Vertreter: Dreiss

(57) **Zusammenfassung**

Vorgestellt wird ein Rippenschälgerät (10) mit einem U-förmigen Messer (14), das an einem Ende eines Vorschubelements (16) angebracht ist, welches durch einen Antrieb des Rippenschälgeräts so angetrieben wird, dass sein Ende eine Hubbewegung ausführt. Das Rippenschälgerät (10) zeichnet sich dadurch aus, dass das Rippenschälgerät (10) einen Antrieb aufweist, der eine oszillierende Hubbewegung des Messers (14) erzeugt und dass das Rippenschälgerät (10) einen Pistolengriff aufweist, der mit der Hubbewegung einen Winkel (α) einschließt.

## Beschreibung

Die vorliegende Erfindung betrifft ein Rippenschälgerät nach dem Oberbegriff des Anspruchs 1.

Ein solches Rippenschälgerät ist aus der DE 28 18 722 A1 bekannt und weist als Schneidelement eine Drahtschlinge auf, die an einem Ende eines Vorschubelements angebracht ist, welches durch einen Antrieb des Rippenschälgeräts so angetrieben wird, dass sein Ende eine Hubbewegung ausführt. Das bekannte Rippenschälgerät erlaubt nach der Darstellung der DE 28 18 722 A1 ein Arbeiten, bei dem die für das Ablösen von Fleisch von Rippen eines Schlachttieres erforderliche Schneidkraft vollständig in dem Gerät selbst erzeugt wird. Das bekannte Gerät weist eine stabförmige Form auf. Ein Ende des Gerätes ist mit Haken versehen, die mit dem zu lösenden Fleisch verhakt werden. Anschließend zieht ein Druckluftbetriebener Arbeitskolben eine Metalldrahtschlinge an der Rippe entlang durch das abzulösende Fleisch hindurch auf das verhakte Ende zu.

Die beim Antrieb des Arbeitskolbens auftretenden Reaktionskräfte werden als Zugkräfte an dem verhakten Ende abgestützt. Dadurch soll ein Benutzer des Geräts beim eigentlichen Ausschälvorgang ganz vom Einsatz eigener Muskelkraft befreit werden.

Mit dieser Befreiung geht jedoch jede haptische Rückmeldung verloren. Beim eigentlichen Ausschälvorgang sind die Korrekturmöglichkeiten des Bedieners damit äußerst begrenzt. Die Einwirkung des Benutzers beschränkt sich darauf, das Gerät beim Ansetzen und Verhaken für den nachfolgenden Ausschälvorgang günstig zu positionieren, was zeitraubend ist.

Die Aufgabe der Erfindung besteht in der Angabe eines Rippenschälgeräts, das ein zügig erfolgendes und weitgehend ermüdungsfreies Ablösen des Fleisches von Rippen von Schlachttieren erlaubt.

Diese Aufgabe wird mit den Merkmalen des Anspruchs 1 gelöst. Das erfindungsgemäße Rippenschälgerät zeichnet sich sowohl durch einen Antrieb aus, der eine oszillierende Hubbewegung des Messers erzeugt, als auch durch einen Pistolengriff, der mit der Hubbewegung einen Winkel einschließt.

Durch den Pistolengriff, der mit der Hubbewegung einen Winkel α einschließt, kann die für das Lösen des Fleisches von einer Rippe 26 erforderliche Zugkraft von einem Benutzer des Rippenschälgerätes über einen längeren Zeitraum als bei einem stabförmigen Gerät ermüdungsfrei aufgebracht werden, weil die Handhabung mit dem Pistolengriff ergonomischer ist. Ein weiterer Vorteil dieser Anordnung besteht darin, dass sie eine einfach realisierbare Möglichkeit bietet, eine Drehbewegung eines im Griff angeordneten Drehantriebs über einen Exzenter- oder Kurbeltrieb in eine periodische Hubbewegung umzuwandeln.

Durch die oszillierende Hubbewegung wird der von einem Benutzer aufgebrachten und über den Pistolengriff angreifenden Zugkraft eine periodische Schwankung überlagert. Diese periodische Schwankung führt dazu, dass sich das Messer mit vergleichsweise geringem Kraftaufwand entlang einer Rippe eines geschlachteten Tieres ziehen lässt, wodurch das Fleisch von der Rippe geschält wird.

Darüber hinaus zeichnet sich die Erfindung gegenüber dem eingangs genannten Stand der Technik durch ein u-förmiges Messer als Schneidelement aus. Durch die Verwendung des u-förmigen Messers an Stelle einer Metalldrahtschlinge ergibt sich insbesondere bei kurzen Rippen ein sauberer Schnitt. Außerdem lässt sich das starre u-förmige Messer schneller ansetzen als eine Metalldrahtschlinge. Die daraus resultierende schnellere Handhabung ist ein großer Vorteil, da das Gerät häufig im Akkord eingesetzt werden wird.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Fig. 1: ein Ausführungsbeispiel eines erfindungsgemäßen Rippenschälgerätes, und
- Fig. 2: eine Ausgestaltung eines Vorschubelementes mit einem Messer.

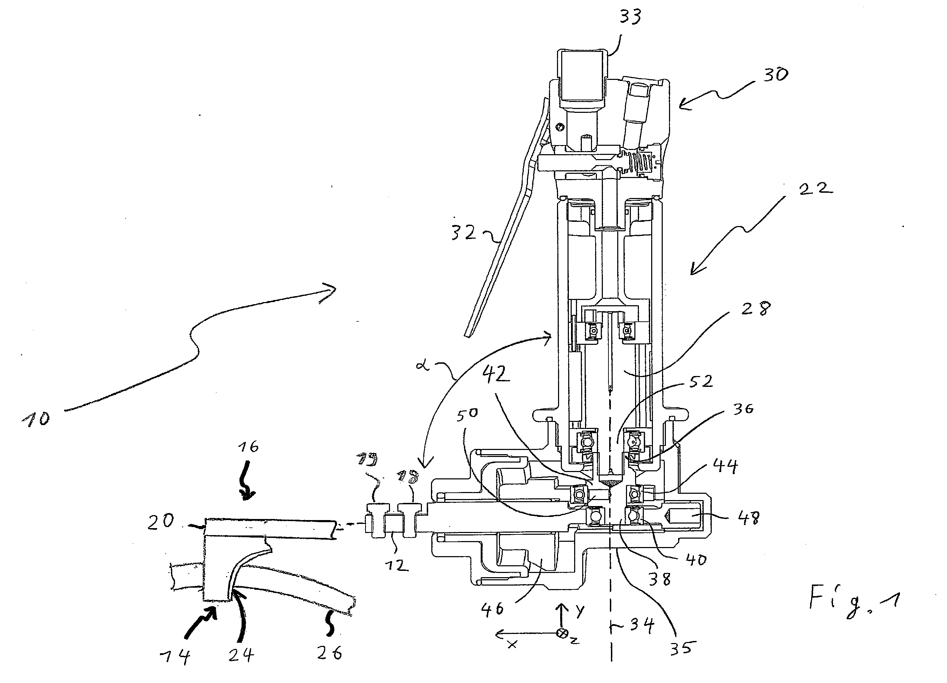

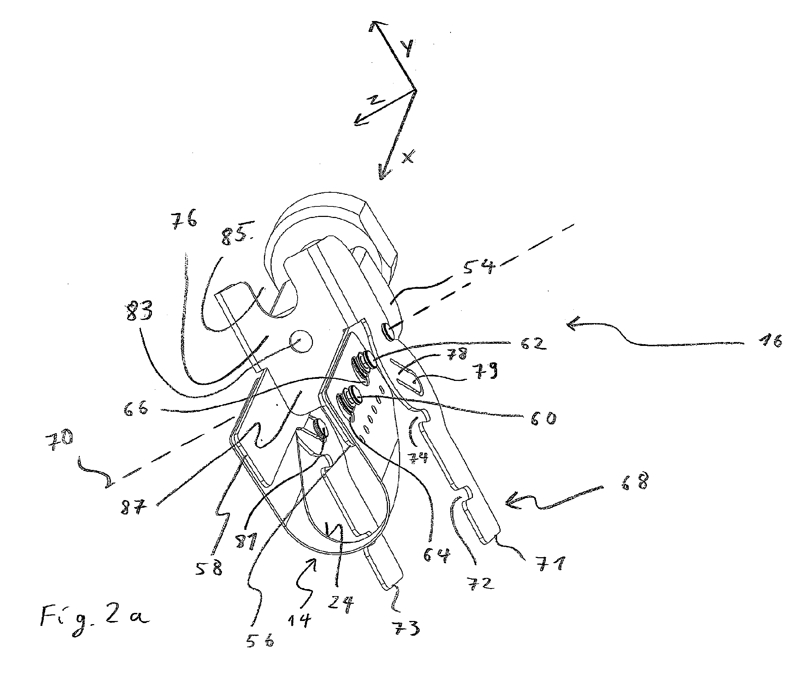

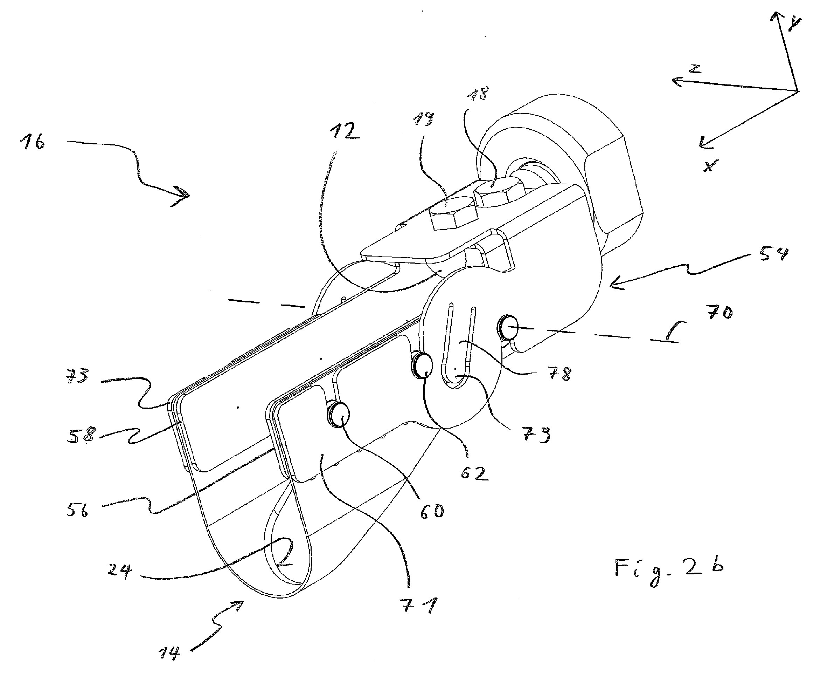

Figur 1 zeigt ein Ausführungsbeispiel eines erfindungsgemäßen Rippenschälgerätes 10. Das Rippenschälgerät 10 weist ein Antriebselement 12 auf, das ein U-förmiges Messer 14 über ein Vorschubelement 16 antreibt. Die U-Form des Messers 14 ist in der Figur 2 erkennbar, in der weitere Einzelheiten des Verbundes aus Messer 14 und Vorschubelement 16 erläutert werden. Das Vorschubelement ist bevorzugt lösbar mit dem Antriebselement verbindbar.

In der Ausgestaltung, die in der Figur 1 dargestellt ist, wird das Vorschubelement 16 mithilfe von Schrauben 18, 19 mit dem Antriebselement 12 verbunden. Das Vorschubelement 16 mit dem U-förmigen Messer 14 kann daher leicht vom Antriebselement 12 gelöst werden, was zum Beispiel für eine separate Reinigung des Vorschubelementes 16 mit dem Messer 14 günstig ist.

Das erfindungsgemäße Rippenschälgerät 10 ist dazu eingerichtet, das Vorschubelement 16 so anzutreiben, dass dessen vom Rippenschälgerät 10 weg weisendes Ende 20 eine oszillierende Hubbewegung in x-Richtung ausführt, die sich auf das Messer 14 überträgt. Die x-Richtung wird damit durch die Richtung der Hubbewegung definiert. Eine y-Richtung liegt orthogonal zur x-Richtung und zumindest annähernd parallel zu einem Pistolengriff 22 des Rippenschälgeräts. Eine z-Richtung ist sowohl zur x-Richtung als auch zur y-Richtung orthogonal ausgerichtet, so dass die x-, y- und z-Richtungen ein am Rippenschälgerät 10 festes rechtshändiges und rechtwinkliges Koordinatensystem bilden.

Einer entgegengesetzt zur x-Richtung gerichteten Zugkraft, die durch Ziehen am manuell gefassten Pistolengriff 22 auf das Rippenschälgerät 10 ausgeübt wird, überlagert sich dadurch eine periodische Schwankung. Diese periodische Schwankung führt dazu, dass sich eine Schneidkante 24 des Messers 14 mit vergleichsweise geringem Kraftaufwand entlang einer Rippe 26 eines geschlachteten Tieres ziehen lässt, wodurch das Fleisch von der Rippe 26 geschält wird.

Der Kraftaufwand wird dabei durch die in einer zur x-y-Ebene parallelen Ebene schräg oder gekrümmt verlaufende Schneidkante 24 des u-förmigen Messers 14 weiter verringert, da die oszillierende Kraft in Verbindung mit der Spannung des Gewebes des Schlachttieres und dem schrägen Schneidkantenverlauf zu oszillierenden Schneidbewegungen führt, die mit der Oszillationsfrequenz des Hubes erfolgen. Die oszillierende Hubbewegung erfolgt dabei abwechselnd in und entgegengesetzt zur x-Richtung.

Das Rippenschälgerät 10 zeichnet sich dadurch aus, dass es einen Pistolengriff 22 aufweist, der mit der Hubbewegung einen Winkel α einschließt. In einer bevorzugten Ausgestaltung liegt der Wert des Winkels α zwischen 70° und 110°, insbesondere zwischen 80° und 100°, besonders bevorzugt zwischen 85° und 95°, insbesondere bei 90°.

Durch diese Ausgestaltungen kann die für das Lösen des Fleisches von einer Rippe 26 erforderliche Zugkraft von einem Benutzer des Rippenschälgerätes 10 über einen längeren Zeitraum als bei einem stabförmigen Gerät ermüdungsfrei aufgebracht werden, weil die Handhabung mit dem Pistolengriff ergonomischer ist. Ein weiterer Vorteil dieser Anordnung besteht darin, dass sie eine einfach realisierbare Möglichkeit bietet, eine Drehbewegung eines im Griff angeordneten Drehantriebs über einen Exzentner- oder Kurbeltrieb in eine periodische Hubbewegung umzuwandeln. Dies gilt insbesondere für die 90°-Ausgestaltung. Von 90° abweichende Winkel sind bei einem solchen Exzentner- oder Kurbeltrieb auch möglich, führen dann aber zu zusätzlichen Relativbewegungen in der Lagerung, in der die Kreisbewegung in eine Hubbewegung umgewandelt wird.

In einer bevorzugten Ausgestaltung erfolgt der Antrieb des Antriebselementes 12 und damit der Antrieb des Vorschubelementes 16 und des Messers 14 mit Druckluft. Druckluft steht in der Regel in Schlachthöfen zur Verfügung.

Grundsätzlich ist es aber auch denkbar, das Antriebselement 12 elektrisch oder hydraulisch anzutreiben. Der Druckluftantrieb bietet gegenüber diesen beiden Alternativen zum Beispiel Gewichtsvorteile, weil keine schweren Anker, Eisenkerne, Wicklungen und/oder Permanentmagnete in das Rippenschälgerät 10 integriert werden müssen. Gegenüber einem hydraulischen Antrieb bietet der Druckluftantrieb wegen des leichteren Arbeitsmediums ebenfalls Gewichtsvorteile. Zusätzlich bietet der Druckluftantrieb den Vorteil einer unproblematischeren Abdichtung, da aus dem Rippenschälgerät 10 entweichende Luft in Bezug auf eine Kontamination von Schlachttieren unproblematischer ist als eine Hydraulikflüssigkeit.

In allen drei Antriebsarten ist es möglich, das Antriebselement 12 jeweils linear anzutreiben. Beim pneumatischen oder hydraulischen Antrieb kann ein linearer Antrieb zum Beispiel dadurch erfolgen, dass man gegenüberliegende Flächen eines Arbeitskolbens anwechselnd unter Druck setzt und damit jeweils abwechselnd entgegengesetzt gerichtete Kräfte auf das Antriebselement 12 ausübt. Ähnlich ließe sich dies durch eine periodische Umpolung eines elektromagnetischen Antriebs bewirken.

Bevorzugt sind jedoch Ausgestaltungen, bei denen zunächst eine Rotation einer Exzenterwelle erzeugt wird, und bei denen die Rotation der Exzenterwelle durch einen Exzenterantrieb in eine oszillierende Bewegung des Antriebselementes 12 umgewandelt wird.

In der Ausgestaltung, die in der Figur 1 dargestellt ist, wird die Antriebskraft durch einen Druckluftlamellenmotor 28 erzeugt, der innerhalb des Pistolengriffs 22 untergebracht ist. Die Druckluftzufuhr zum Lamellenmotor 28 wird von einem Ventilmodul 30 gesteuert, das dazu einen Betätigungshebel 32 und einen Druckluftanschluss 33 aufweist.

Das Ventilmodul ist zusammen mit dem Betätigungshebel 32 in den Pistolengriff 22 integriert. Derartige bauliche Einheiten aus Druckluftlamellenmotor 28, Ventilmodul 30 und Betätigungshebel 32 sind dem Fachmann von anderen Druckluftwerkzeugen her bekannt und werden daher auch hier als bekannt vorausgesetzt.

Der Pistolengriff 22 weist ein Druckluftanschluss 33 -seitiges Ende und ein gegenüber liegendes, Exzenter-seitiges Ende 35 auf. Die Handhabung des Rippenschälgeräts 10 erfolgt bevorzugt mit einer Griffhaltung, bei der der Pistolengriff 22 mit seinem Druckluftanschluss 33 -seitigen Ende zum Daumen und mit seinem Exzenterseitigen Ende 35 zum Handballen ausgerichtet ist.

Wesentlich ist, dass die um eine Drehachse 34 erfolgende Drehung eines Rotors des Druckluftmotors 28 durch eine Exzenterwelle 36 in eine oszillierende Hubbewegung des Antriebselementes 12 umgewandelt wird. Dazu weist die Exzenterwelle 36 einen ersten Exzenter 38 auf, der in einer einem Langloch ähnelnden Ausnehmung des Antriebselementes 12 beweglich geführt wird.

Die Figur 1 zeigt in diesem Zusammenhang ein exzentrisch zur Drehachse 34 angeordnetes erstes Exzenterlager 40, über das die Bewegung des ersten Exzenters 38 auf das Antriebselement 12 übertragen wird. Der Winkel α beträgt hier 90°. Das Exzenterlager 40 ist in der dargestellten Ausgestaltung ein Wälzlager mit einem Innenring und einem Außenring, der über Wälzkörper drehbar auf dem Innenring gelagert ist. Der Innenring sitzt fest auf dem ersten Exzenter 38, und der Außenring berührt je nach Drehstellung des Exzenters verschiedene Stellen einer Innenfläche der Ausnehmung.

In einer bevorzugten Ausgestaltung beträgt die Drehzahl des Druckluft-Lamellenmotors 28 und damit die Hubzahl des Messers 14 im Leerlauf des Rippenschälgerätes 1.000 bis 10.000 min⁻¹, insbesondere 3.000 bis 9.000 min⁻¹, besonders bevorzugt 5.000 bis 8.000 min⁻¹. Dabei ist die Exzentrizität des ersten Exzenters 38 bevorzugt so dimensioniert, dass ein einzelner Hub 1,5 bis 4,5 mm, insbesondere 2 bis 4 mm, besonders bevorzugt 2,5 bis 3,5 mm beträgt.

In einer bevorzugten Ausgestaltung weist die Exzenterwelle 36 nicht nur den über das erste Exzenterlager 40 mit dem Antriebselement 12 gekoppelten ersten Exzenter 38, sondern zusätzlich noch einen zweiten Exzenter 42 auf, der gegenüber dem ersten Exzenter 38 um eine halbe Umdrehung versetzt auf der Exzenterwelle 36 angeordnet ist. Ein solcher zweiter Exzenter 42 ist beim Gegenstand der Figur 1 über ein zweites Exzenterlager 44 mit einem Schwingungstilger 46 gekoppelt. Das zweite Exzenterlager 44 ist in der dargestellten Ausgestaltung ein Wälzlager mit einem Innenring und einem Außenring, der über Wälzkörper drehbar auf dem Innenring gelagert ist. Der Innenring sitzt fest auf dem zweiten Exzenter 42, und der Außenring berührt je nach Drehstellung des zweiten Exzenters 42 verschiedene Stellen einer Innenfläche einer Ausnehmung in dem Schwingungstilger 46.

Der Schwingungstilger 46 bewegt sich dann entlang der x-Richtung gegenläufig zu dem Antriebselement 12, so dass sich die bei der Oszillation entstehenden Trägheitskräfte und Reaktionskräfte weitgehend kompensieren.

Für eine solche weitgehende Kompensation sieht eine vorteilhafte Ausgestaltung vor, dass die Masse des Schwingungstilgers 46 näher am Wert der Summe der Masse des Antriebselementes 12, des Vorschubelementes 16 und des Messers 14 als am Wert der Masse des Antriebselementes 12 allein liegt.

Um die Trägheitskräfte und die resultierenden Reaktionskräfte von vornherein zu beschränken, sieht eine weitere vorteilhafte Ausgestaltung vor, dass die Exzenterwelle 36 und das Antriebselement 12 an geeigneten Stellen 48, 50, 52 jeweils hohlgebohrt ist, um die oszillierenden Massen zu verringern.

Im Folgenden wird unter Bezug auf die Figur 2 eine bevorzugte Ausgestaltung eines Vorschubelementes 16 beschrieben, das dazu eingerichtet ist, von dem Antriebselement 12 des Rippenschälgerätes 10 angetrieben zu werden und insofern ein Bestandteil des Rippenschälgerätes 10 bildet.

Die Verwendung des Gegenstandes der Figur 2 ist jedoch nicht auf eine Verbindung mit dem Gegenstand der Figur 1 beschränkt. Der Gegenstand der Figur 2 kann vielmehr auch in Verbindung mit anderen Antriebsmitteln, zum Beispiel mit stabförmigen Antriebsmitteln ohne Pistolengriffanordnung oder auch in Verbindung mit einem einfachen Handgriff, also ohne Hilfskraftantrieb, verwendet werden.

Einzelne Ausgestaltungen des Gegenstandes der Figur 2 weisen aus Sicht der Anmelderin eine eigenständige Erfindungsqualität auf, die gegebenenfalls in Form von Teilanmeldungen weiterverfolgt werden sollen.

Im Einzelnen zeigt die Figur 2 ein Vorschubelement 16 eines Rippenschälgerätes 10. Das Vorschubelement 16 weist eine Gabelform mit einem Schaft 54 und einer in zwei Gabelenden 56, 58 auslaufenden Messeraufnahme auf. Der Schaft 54 wird in der dargestellten Ausgestaltung durch Schrauben 18 und 19 mit dem Antriebselement 12 verbunden, die in der Fig. 2 verdeckt, in der Fig. 2 b jedoch sichtbar sind.

Die Messeraufnahme weist erste Halteelemente in Form von Zapfen 60, 62 auf, die durch ihre Form und Anordnung dazu eingerichtet sind, mit zweiten Halteelementen 64, 66 eines U-förmigen Messers 14 verriegelt zu werden.

In der Ausgestaltung, die in der Figur 2 dargestellt ist, sind die ersten Halteelemente 60, 62 fest mit einem Gabelende 56 verbundene Zapfen, und die zweiten Halteelemente 64, 66 sind Ausnehmungen in einem Schenkelblech des U-förmigen Messers 14. Zur Montage des U-förmigen Messers 14 werden die Zapfen 60, 62 in die Ausnehmungen 64, 66 gebracht. Die in der Fig. 2 verdeckten Rückseiten des Gabelendes 58 und des Messers 14 sind entsprechend ausgestaltet.

In einer Ausgestaltung erfolgt die Montage dadurch, dass die Gabelenden 56, 58 vorübergehend in z-Richtung aufeinander zu gedrückt werden oder dadurch, dass die Schenkel des U-förmigen Messers 14 vorübergehend in z-Richtung auseinandergedrückt werden und die Zapfen 60, 62 anschließend in die Ausnehmungen 64, 66 eingebracht werden. Wenn sich die Zapfen 60, 62 in den Ausnehmungen 64, 66 befinden, ist das U-förmige Messer 14 in y-Richtung kraft- und/oder formschlüssig mit den Gabelenden 56, 58 verbunden.

Ein Messer-Verriegelungselement 68 ist um eine parallel zur z-Achse und damit quer zur Ausdehnung des Schafts 54 liegende Schwenkachse 70 schwenkbar gelagert und weist einseitig offene Aufnahmen 72, 74 auf. Die Aufnahmen 72, 74 sind durch ihre Abmessungen und ihre Anordnungen dazu eingerichtet, bei einer zu den Zapfen 60, 62 gerichteten Schwenkbewegung des Verriegelungselements 68 radial auswärts weisende Vorsprünge der Zapfen 60, 62 zu hintergreifen und das Schenkelblech dadurch in z-Richtung und in x-Richtung formschlüssig mit dem Gabelende 56 zu verriegeln.

Das Messer-Verriegelungselement 68 weist bevorzugt zwei Schenkel 71, 73 auf, von denen jeder dazu eingerichtet ist, auf die beschriebene Weise mit einem der Gabelenden 56, 58 und einem U-Schenkel des U-förmigen Messers 14 zusammenzuwirken. Jeder Schenkel 71, 73 weist zu diesem Zweck Aufnahmen 72, 74 auf. Beide Schenkel 71, 73 des Messer-Verriegelungselementes 68 sind bevorzugt durch einen Verbindungsabschnitt 76 einstückig miteinander verbunden.

Ein Paar elastischer Zungen 78, von denen jeweils eine in einem Schenkel 71, 73 des Messer-Verriegelungselements 68 angeordnet ist und von denen jede ein freies Ende 79 mit einer zu dem jeweils anderen Schenkel weisenden Verdickung 81 aufweist, wird beim Schwenken des Messer-Verriegelungselements 68 in die in der Fig. 2 b dargestellte Position elastisch verspannt. Dabei gleiten die die Verdickungen auf Schenkel des Messers 24 auf und drücken diese nach innen. Gleichzeitig werden die Schenkel 71, 73 des Messer-Verriegelungselements 68 auseinander und damit gegen radiale Überstände der Zapfen 60, 62 gedrückt. Dadurch wird ein Spiel des in der Aufnahme verriegelten Messers beseitigt.

Eine Schraube 19 dient zur Befestigung des Messer-Verriegelungselements 68 an dem Schaft 54 und dem Antriebselement 12 in der in der Fig. 2b dargestellten, geschlossenen Schwenkstellung. Damit dient die Schraube 18 zur Befestigung des ganzen Vorschubelements 16 an dem Antriebselement 12, während die weitere Schraube 19 sowohl das ganze Vorschubelement 16 als auch das Messer-Verriegelungselement 68 an dem Antriebselement 12 befestigt. Wenn man das Messer 14 tauschen will, muss daher nur die Schraube 19 gelöst werden. Der Verbindungsabschnitt 76 weist eine Ausnehmung 83 zur Aufnahme der Schraube 19 auf. Die Ausnehmung 83 erlaubt ein Durchschieben des Gewindebolzens der Schraube 19. Der die Ausnehmung umlaufende Rand der Ausnehmung wird beim Anziehen der Schraube 19 durch deren Kopf auf das darunterliegende Blech des Schaftes 54 gepresst. Eine zweite Ausnehmung 85 ist dazu ausgestaltet, bei befestigtem Vorschubelement 16 und verriegeltem Messer-Verriegelungselement 68 den Kopf der Schraube 18 zu umgreifen, ohne dass die Ränder der Ausnehmung 85 den Kopf der Schraube 18 hintergreifen. Die Ausnehmung 85 erlaubt damit ein Schwenken des Messer-Verriegelungselements 68 von der geschlossenen Stellung, wie sie in der Fig. 2 b dargestellt ist, in die geöffnete Stellung, wie sie in der Fig. 2 a dargestellt ist, ohne dass dazu die Schraube 18 gelöst werden muss.

Eine bevorzugt einstückig mit dem Verbindungselement 76 verbundene Hebelplatte 87 erlaubt ein manuelles Verschwenken des Messer-Verriegelungselements 68, ohne dass dabei das Messer 14 berührt werden muss. Dadurch wird die Handhabbarkeit beim Messerwechsel verbessert und die Verletzungsgefahr verringert.

Das Messer 14 weist die Schneidkante 24 auf, die beide Schenkel des U-förmigen Messers 14 in einem Verbindungsbogen miteinander verbindet. Der Verbindungsbogen befindet sich im montierten Zustand in y-Richtung unterhalb der Gabelenden 56, 58. Die Schneidkante 24 geht vom Verbindungsbogen des U-förmigen Messers 14 ausgehend stetig verlaufend in die Höhe der Gabelenden 56, 58 über, die sich in der Darstellung der Fig. 2 jeweils parallel zur x-Richtung erstrecken. Dadurch ergibt sich bei einer aus der z-Richtung erfolgenden Betrachtung ein schräg zur x-Richtung oder gekrümmt verlaufender Anstieg der Schneidkante 24 vom Verbindungsbogen des U-förmigen Messers 14 hin zu seinen Ende, das im montierten Zustand zum Antriebselement 12 weist. Wie aus den Figuren 2 a und 2 b ersichtlich ist, ergibt sich ferner bei einer aus der y-Richtung erfolgenden Betrachtung des Messers 14 ein ebenfalls U-förmiger Verlauf der Schneidkante 24.

Bei seiner bestimmungsgemäßen Verwendung wird das Vorschubelement 16 mit dem Messer 14 so parallel zu einer Rippe 26 eines geschlachteten Tieres ausgerichtet, dass ein freies Ende der Rippe 26 in x-Richtung weist und dass sich die Rippe 26 innerhalb der beiden Gabelenden 56, 58 so erstreckt, dass die Schneidkante 24 das freie Rippenende hintergreift. Anschließend wird das Vorschubelement 16 mit Schneidkante 24 entgegen der x-Richtung mit einer überlagerten oszillierenden Hubbewegung gezogen. Dadurch wird die Rippe 26 vom sie umgebenden Fleisch gelöst.

## Patentansprüche

1. Rippenschälgerät (10) mit einem Schneidelement, das an einem Ende eines Vorschubelements (16) angebracht ist, welches durch einen Antrieb des Rippenschälgeräts so angetrieben wird, dass sein Ende eine Hubbewegung ausführt, **dadurch gekennzeichnet, dass** das Schneidelement ein u-förmiges Messer ist und das Rippenschälgerät (10) einen Antrieb aufweist, der eine oszillierende Hubbewegung des Messers (14) erzeugt und dass das Rippenschälgerät (10) einen Pistolengriff aufweist, der mit der Hubbewegung einen Winkel (α) einschließt.

2. Rippenschälgerät (10) nach Anspruch 1, **dadurch gekennzeichnet, dass** der Winkel (α) zwischen 70° und 110° beträgt.

3. Rippenschälgerät (10) nach einem der vorhergehenden Ansprüche 1, **dadurch gekennzeichnet, dass** das Rippenschälgerät (10) ein Antriebselement (12) aufweist, das ein U-förmiges Messer (14) über ein Vorschubelement (16) antreibt, das mit dem Antriebselement (12) lösbar verbunden ist.

4. Rippenschälgerät (10) nach einem der vorhergehenden Ansprüche, **dadurch gekennzeichnet, dass** das Messer (14) eine Schneidkante (24) aufweist, die in einer Ebene, die parallel zur von der Hubrichtung und der Ausrichtung des Pistolengriffs gebildeten Ebene parallel ist, schräg zur Hubrichtung und/oder gekrümmt verläuft.

5. Rippenschälgerät (10) nach einem der vorhergehenden Ansprüche, **dadurch gekennzeichnet, dass** es einen Druckluftantrieb des Antriebselementes (12) und damit des Vorschubelementes (16) und des Messers (14) mit Druckluft aufweist.

6. Rippenschälgerät (10) nach Anspruch 5, **dadurch gekennzeichnet, dass** es dazu eingerichtet ist, durch einen Druckluftantrieb eine Rotation einer Exzenterwelle (36) zu erzeugen und die Rotation der Exzenterwelle (36) durch einen Exzenterantrieb in eine oszillierende Bewegung des Antriebselementes (12) umzuwandeln.

7. Rippenschälgerät (10) nach Anspruch 5 oder 6, **dadurch gekennzeichnet, dass** der Druckluftantrieb durch einen Druckluftlamellenmotor (28) erfolgt, der innerhalb des Pistolengriffs (22) untergebracht ist.

8. Rippenschälgerät (10) nach Anspruch 7, **dadurch gekennzeichnet, dass** die Drehzahl des Druckluftlamellenmotors (28) und damit die Hubzahl des Messers (14) im Leerlauf des Rippenschälgerätes (10) 1.000 bis 10.000 min⁻¹, insbesondere 3.000 bis 9.000 min⁻¹, insbesondere 5.000 bis 8.000 min⁻¹ beträgt.

9. Rippenschälgerät (10) nach einem der Ansprüche 6 bis 8, **dadurch gekennzeichnet, dass** eine Exzentrizität der Exzenterwelle (36) so dimensioniert ist, dass ein einzelner Hub 1,5 bis 4,5 mm, insbesondere 2 bis 4 mm, insbesondere 2,5 bis 3,5 mm beträgt.

10. Rippenschälgerät (10) nach einem der Ansprüche 6 bis 9, **dadurch gekennzeichnet, dass** die Exzenterwelle (36) zusätzlich zu einem mit dem Antriebselement (12) gekoppelten ersten Exzenter (38) einen zweiten Exzenter (42) aufweist, der gegenüber dem ersten Exzenter (38) um eine halbe Umdrehung versetzt auf der Exzenterwelle (36) angeordnet ist und der mit einem Schwingungstilger (46) gekoppelt ist.

11. Rippenschälgerät (10) nach Anspruch 10, **dadurch gekennzeichnet, dass** der Schwingungstilger (46) und eine Führung des Schwingungstilgers (46) im Rippenschälgerät (10) dazu eingerichtet ist, sich entlang der Hubrichtung des Antriebselements (12) und gegenläufig zu dem Antriebselement (12) zu bewegen, so dass sich die bei der Oszillation des Antriebselements (12) und des Schwingungstilgers (46) entstehenden Trägheitskräfte und Reaktionskräfte kompensieren.

12. Rippenschälgerät (10) nach Anspruch 11, **dadurch gekennzeichnet, dass** der Wert der Masse des Schwingungstilgers (46) näher am Wert der Summe der Massen des Antriebselementes (12), des Vorschubelementes (16) und des Messers (14), als am Wert der Masse des Antriebselementes (12) allein liegt.
